# EUROPEAN PATENT SPECIFICATION

(11) **EP 3 624 597 B1**
(45) Date of publication and mention of the grant of the patent: **04.10.2023**
(21) Application number: 18817822.2
(22) Date of filing: 14.06.2018
(51) Int. Cl.: A23L 11/00, A23L 5/00, A23P 10/20, A23P 30/20, A23L 7/109

(54) **PULSE-BASED PASTA AND PROCESS FOR MANUFACTURING THE SAME**
HÜLSENFRUCHTBASIERTE PASTA UND HERSTELLUNG DAVON
COMPOSITION À BASE DE LÉGUMES SECS ET SON PROCÉDÉ DE FABRICATION

(30) Priority: 15.06.2017 US 201762520369 P
(43) Date of publication of application: 25.03.2020
(73) Proprietor: AGT Food And Ingredients Inc., Regina, Saskatchewan S4V 3L7 (CA)
(72) Inventor: AL-KATIB, Murad, Regina, Saskatchewan S4V 3L7 (CA); BOURASSA, Gaetan, Regina, Saskatchewan S4V 3L7 (CA); ARSLAN, Huseyin, Regina, Saskatchewan S4V 3L7 (CA); BARTSCH, Eric, Regina, Saskatchewan S4V 3L7 (CA); KNUDSON, Les, Regina, Saskatchewan S4V 3L7 (CA); VITALE, Davide, Regina, Saskatchewan S4V 3L7 (CA); TULBEK, Mehmet, Regina, Saskatchewan S4V 3L7 (CA)
(74) Representative: Wunderlich & Heim Patentanwälte Partnerschaftsgesellschaft mbB
(86) International application number: PCT/CA2018/050717
(87) International publication number: WO 2018/227296

(56) References cited:
- WO-A1-2015/158960
- CA-A- 1 076 412
- CA-A- 1 076 412
- CA-A1- 2 082 267
- CA-A1- 2 216 295
- US-A- 5 087 470
- US-A- 5 492 712
- US-A- 5 492 712
- US-A- 5 989 620
- US-A1- 2015 150 288

## Description

### RELATED

The present application claims priority to U.S. Provisional Patent Application No. 62/520,369, filed on June 15, 2017.

### FIELD

This invention is in the field of pulse based-pasta production by using processed pulse flours, and more specifically processed using a heat and moisture treatment process.

### BACKGROUND

Conventional manufacturing of dried pasta involves hydrating gluten containing common wheat and durum wheat flour with water to form a pasta dough. The pasta dough is then cold extruded (e.g. in a temperature range of 45-60□C) and dried to create shelf-stable pasta. A strong protein and starch network is formed due to the gluten presence in the flour. The protein network helps holds the pasta together after drying and holds the flour starch together during cooking. Without the strong protein and starch network, the pasta falls apart into constituent components either before cooking or while cooking.

A pasta product formed from a low-protein flour is described in U.S. Pub. No. 2017/0035082 to Tutuncu et al. The pasta is formed from the low-protein flour by blending it with water to form pasta dough. The low-protein flour may range from 3% dry weight protein to 12% dry weight protein. The pasta dough is then hot extruded to produce extruded pasta before being dried. In contrast to cold extrusion where the goal is to minimize starch gelatinization while shaping the pasta dough, hot extrusion causes starch within the low-protein flour to gelatinize. The gelatinized starch compensates for the lack of protein network structure caused by using a low-protein flour.

A process for the production legume meal is described in W.O. Pub. No. 2016/120234 to Ambiente E Nutrizione S.R.L. The process comprises the steps of: a) providing a wet heat treatment reactor comprising a cylindrical tubular body with horizontal axis, having an opening for the introduction of legume meal and water or an aqueous solution and having at least one discharge opening, a heating jacket and a rotor arranged inside the cylindrical tubular body; b) feeding a continuous flow of meal into the reactor, in which the rotor is rotated at a speed greater than or equal to 150 rpm; c) feeding into the reactor, together with the flow of meal, a continuous flow of water or aqueous solution, which is dispersed into minute droplets; d) centrifuging the aforementioned flows against the inner wall of the reactor, thus forming a highly turbulent, dynamic, thin tubular fluid layer, while advancing in substantial contact with the inner wall of the reactor towards the discharge opening; e) discharging from the discharge opening a continuous flow of a wet meal (moisture content 20-40%); f) providing a thermal dehydration and treatment reactor, comprising a cylindrical tubular body with horizontal axis, having at least one inlet opening and at least one discharge opening, a heating jacket and a rotor arranged inside the cylindrical tubular body and comprising a shaft provided with elements projecting radially therefrom; g) feeding the wet meal into the thermal dehydration and treatment reactor, the inner wall of the reactor being kept at a temperature of at least 100°C and the rotor being rotated at a speed of at least 150 rpm; h) centrifuging and causing the wet meal to advance inside the reactor by the action of the rotor; i) discharging from the discharge opening of the reactor a continuous flow of legume meal having a moisture content of between 2% and 15%.
WO 2015/158960 A1 to Teknologian Tutkimuskeskus Vtt Oy discloses a method comprising the steps of grinding faba beans, subjecting the ground faba beans to fractionation by air classification, separating a fraction having average particle size of about D50 = 20 -100 µm and D90 = 40 -150 µm, and blending gluten-free flour comprising the separated fraction, with water to obtain pasta dough. The present invention also relates to gluten-free pasta comprising the faba bean fraction and to the use of the faba bean fraction in the manufacture of gluten-free pasta.
CA 1076412 A discloses A method of making a food product with good flow characteristics from a flour of a legume that has a protein and a starch content comprising the steps of maintaining the flour particles dispersed in air within a chamber; forming the dispersed flour particles into agglomerated particles by contacting them with steam to raise their temperature to at least 170°F.
US 5,087,470 A discloses a non-wheat containing pasta product prepared from urad legumes. Optionally, other legumes and/or non-wheat cereal grains may be combined with the urad legumes.
US 5,989,620 A discloses a high temperature extrusion process for the production of legume pasta products. A dough mixture having a moisture content in the range of 15 to 40% is processed in a twin screw extruder or in a single screw extruder at a barrel temperature in the range of 70 to 135°C. and extruded through a die to form legume pasta products. The resulting products have a superior texture and integrity compared to legume pasta products produced by the traditional method.
US 5,492,712 A discloses a pasta product consisting essentially of low gluten or gluten-free flour, the flour being selected from the group consisting of uncooked grain, legume, tuber or vegetable flours, in combination with water and stabilizers.
US 2015/150288 A1 discloses a pasta product that can be formed from a low protein flour by blending the low protein flour with water to form a pasta dough. In some examples, the pasta dough is then hot extruded to produce an extruded pasta before being dried. In contrast to cold extrusion where the goal is to minimize starch gelatinization while shaping the pasta dough, hot extrusion can cause starch within the low protein flour to gelatinize. The gelatinized starch may help compensate for the lack of protein network structure caused by using a low protein flour.

### SUMMARY

The method of the present invention is a method of manufacturing a pasta from pulses which comprises:
- hydrating and heating a limited-protein pulse fraction with a protein content of less than 16% dry weight to produce a hydrated pulse fraction with a moisture content in a range of 27% to 40% by weight;
- agglomerating the hydrated pulse fraction to produce agglomerated dough granules;
- drying the agglomerated dough granules to a moisture content of less than about 10% moisture;
- rehydrating the agglomerated dough granules and cooking the agglomerated dough granules to produce a cooked pulse dough;
- extruding the cooked pulse dough to produce an extruded pasta; and
- drying the extruded pasta to produce a dried pasta with a moisture content between about 5% to 12.5% by weight

In some of the aspects described herein, there is provided a method of manufacturing a pulse-based pasta from pulses. A mixer may hydrate a limited protein pulse fraction to between about 27% to 40% by weight with water in a temperature range of about 25°C to 85°C at atmospheric pressure to produce a hydrated pulse dough with a temperature range of about 65°C to about 85°C. The hydrated pulse dough may be agglomerated to produce agglomerated pulse dough. The agglomerated pulse dough may be heated at about 95°C to about 150°C to cook and dry the agglomerated pulse dough to a moisture content of less than about 10% moisture. Rehydrating the agglomerated pulse dough to a moisture range from about 25% to about 43% by weight and cooking the agglomerated pulse dough in a barrel of a screw extruder to produce a cooked pulse dough. The cooked pulse dough may be extruded to produce an extruded pasta. The extruded pasta may be dried to produce a dried pasta with a moisture content between about 7% to 12.5% by weight. The dried pasta may be packaged.

In some of the aspects, the method may further comprise separating, using classification, a raw pulse flour into the limited protein pulse fraction and a medium-protein pulse fraction. In another aspect, the method may further comprise blending a medium-protein pulse fraction and a starch to produce the limited protein pulse fraction.

The method may comprise dehulling at least one hulled pulse prior to milling to produce the at least one dehulled pulse and at least one outer hull. The method may comprise milling at least one dehulled pulse to produce the raw pulse flour. The method may comprise cleaning the at least one hulled pulse. The raw pulse flour may comprise particle sizes of below about 80 microns. The protein range of the limited protein pulse fraction is less than about 16% dry weight. In particular, the protein range of the limited protein pulse fraction may be within a range of about 7% to about 16% dry weight.

The limited protein pulse fraction is to between 27% and 40% by weight. In particular, the limited protein pulse fraction may be hydrated to between about 27% to about 33% by weight.

In some aspects, the method may comprise milling the heated agglomerated pulse dough through a mesh having a sieve size of about 0.150 mm.

In some aspects, a temperature of the agglomerated pulse dough within the barrel of the screw extruder may range from about 105°C to about 125°C at atmospheric pressure. A cooking temperature within the barrel of the screw extruder may range from about 100°C to about 125°C at high pressure. A screw speed of the screw extruder may be between about 150 rpm to about 400 rpm. A percent torque of the screw extruder may be between about 20% to about 50%. A specific mechanical energy of the extruder may be between about 15 to about 75 Wh/kg.

In another aspect, the temperature of the agglomerated pulse dough within the barrel of the screw extruder may have a cylinder temperature within a range of about 45°C to about 80°C and a feeder temperature with a range of about 45°C to about 85°C. The cylinder may have a pressure with a range of about 20-bar to about 90-bar.

In some aspects, the dried pasta may have the moisture content between about 7% to 12.5% by weight and the dried pasta may have protein in a range of about 7% to about 16% by weight. More particularly in some aspects, the dried pasta may have protein of about 12%.

In some aspects, the extruded pasta may be heated in a range of 50°C to about 95°C at atmospheric pressure. In particular, the extruded pasta may be heated in a range of about 60°C to about 92°C at atmospheric pressure.

According to any aspect, the screw extruder may be a twin screw mixer and extruder.

### DESCRIPTION OF THE DRAWINGS

While the invention is claimed in the concluding portions hereof, example embodiments are provided in the accompanying detailed description which may be best understood in conjunction with the accompanying diagrams where like parts in each of the several diagrams are labeled with like numbers, and where:
Fig. 1 is a flowchart for producing a pulse-based pasta according to one aspect;

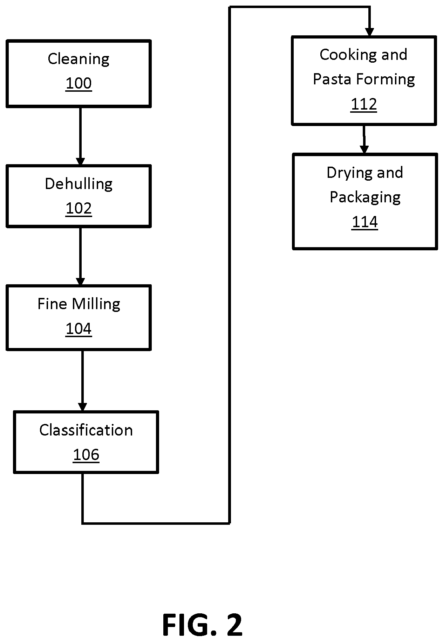

Fig. 2 is a flowchart for producing the pulse-based pasta according to another aspect;
Fig. 3 is a flowchart for producing the pulse-based pasta according to yet another aspect; and
Fig. 4 is a sensory evaluation comparison of a pulse flour to a heat and moisture treated pulse-based flour.

### DETAILED DESCRIPTION

There has been a recent increase in gluten-related disorders, such as celiac disease, non-celiac gluten sensitivity, wheat allergy, gluten ataxia, and dermatitis herpetiformis. As knowledge of these gluten-related disorders has increased, there has been a corresponding increase in the interest for gluten-free products. One such product comprises gluten-free pasta. Most conventional pasta contains some amount of gluten, especially if it is made from durum wheat flour. Pulse-based pasta may be suitable for gluten-free and allergen-free applications that may be consumed by celiac patients, non-celiac gluten allergy, and gluten sensitive consumers. Pulse-based pasta may be produced from pulses, such as, for example, peas, lentils, and faba beans. However, pulse flour and the pulse-based pasta made therefrom may have an unappealing aftertaste for some consumers.

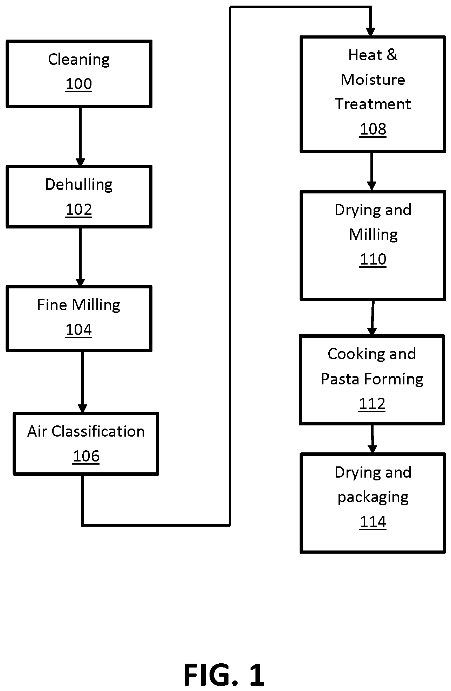

Generally, with reference to FIG. 1, pulse flours may be produced by cleaning 100, dehulling, 102, fine milling/grinding 104, classification 106, heat and moisture treatment 108, and drying and milling processes 110 in which the flow, taste, and/or sensory properties of the flour may be enhanced as described herein. For example, pasta made according to the process of FIG. 1 may exhibit a reduced pulse flavor and have a more roasted flavor. Although the aspects described herein are directed to peas, one or more of these techniques may equally apply to other pulses, such as, but not limited to, lentils, faba beans, navy beans, pinto beans, and/or black beans (or any combination thereof).

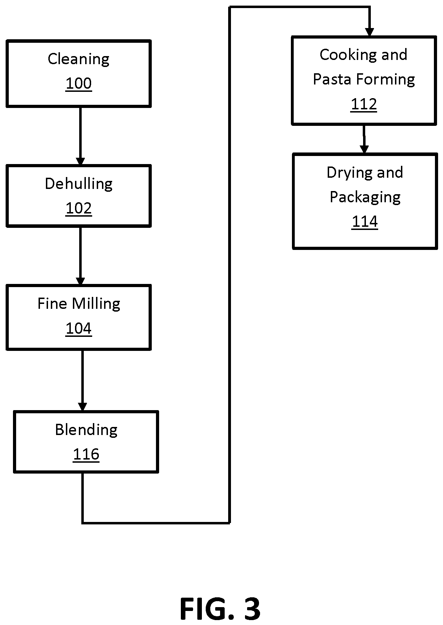

Pasta may be formed from the flour after step 104, 106, 108, or 110, depending on the desired flavor, by extruding and cooking 112, and drying and packaging 114 the pasta. One such example is demonstrated in FIG. 3 where the cleaning 100, dehulling 102, fine milling 104 may be performed. Following the fine milling 104, the pulse flour may be blended with a starch (step 116) to achieve the desired amount of protein. The pasta may then be formed and cooked (step 112) using the blended pulse flour and starch. The pasta may be dried and packaged 114. The pasta produced by this process may exhibit a stronger pulse flavor and no roasted flavor.

The cleaning process 100 may be applied to remove impurities from whole peas so that product cleanliness may be sustained. During the cleaning process 100, impurities such as chaff, other crops, stones, black-off colour kernels, damaged and/or broken seeds may be removed.

Dehulling 102 may be applied to produce dehulled pulses (e.g. split peas, split lentils, or split faba beans) and to remove outer hulls so that outer fiber portion of the peas may be removed to remove the fiber and to increase the yield of protein and starch separation. The outer hulls may be removed in the dehulling process 102 using mechanical forces applied by peelers. Since the hulls adhere on a cotyledon on the outer part of a kernel, these forces may help remove the outer hulls from the whole kernel and separate cotyledon.

Fine milling 104 process may be applied to the split peas to produce a raw pulse flour with a particle size of below about 80 microns. The particle size of below about 80 microns may assist in classification 106 in order to separate a starch fraction from a protein fraction. This particle size may apply particularly to peas, lentils, faba beans, and/or other low fat pulse crops. The fine milling 104 process may use various such as, for example, a pin mill, an ACM mill, a turbo jet mill, and/or other fine grinding systems. The lower particle size of the raw pulse flour may assist separation of the protein and starch granule. At this fine particle size, the protein bodies may be removed from starch granules using such techniques as described in at least U.S. Pat. No. 1,861,248 to Stebbins or U.S. Pat. No. 3,089,595 to Alpine Ag Maschinenfabrik Und.

During classification 106, the raw pulse flour may be separated into a limited protein pulse fraction with a protein range from about 7-16% dry weight. The medium protein pulse fraction having over between about 20% to about 32% dry weight protein may also be used within blending systems in pasta processing. The classification 106 may be performed by a classifier such as produced by Hosokawa Alpine Aktiengesellschaft, Sturtevant, etc.

Rather than classification 106, the limited protein pulse fraction may comprise medium (20-32%) level pulse flours (after fine milling 104) and may be blended with pea, lentil, and/or faba bean starch isolates (e.g. starch content >97% and protein <3%). Variable formulations are listed in Table 1. Pulse starch isolate may be used as texturizing agents combined with medium protein pulse flours to establish protein levels at a range of 7-16%.

**Table 1**

| | **Blend 1 (%wt)** | **Blend 2 (%wt)** | **Blend 3 (%wt)** | **Blend 4 (%wt)** | **Blend 5 (%wt)** | **Blend 6 (%wt)** |
|---|---|---|---|---|---|---|
| **Medium protein pulse flour (23% protein)** | 50 | 50 | 50 | 40 | 40 | 40 |
| **Pea starch isolate (2% protein)** | 50 | 0 | 0 | 60 | 0 | 0 |
| **Lentil starch isolate (2% protein)** | 0 | 50 | 0 | 0 | 60 | 0 |
| **Faba bean starch (2% protein) isolate** | 0 | 0 | 50 | 0 | 0 | 60 |
| **Typical Protein Levels of Blends (%wt)** | 12.5 | 12.5 | 12.5 | 10.4 | 10.4 | 10.4 |

Heat and moisture treatment 108 may be applied to improve sensory and flavor attributes of the limited protein pulse flour fraction. The limited protein pulse flour fraction may also be agglomerated as part of the heat and moisture treatment 108. In some aspects, the agglomeration may be performed with a pasta press mixer kneader operating in a range of about 80-rpm to about 130-rpm. The initial moisture content of the limited protein pulse flour fraction before hydration may be between about 4% to about 12% and may be measured prior to hydration in order to determine the amount of hydration required. The limited protein pulse flour fraction is hydrated in the range of 27% to 40% by weight with water, as defined in claim 1. In some particular aspects, the limited protein pulse fraction may be hydrated in a range of between about 27% to about 33% by weight with water. The water may have a temperature range of about 25°C to about 85°C. The high temperature water and/or high pressure steam may be added and mixed to produce agglomerated dough granules. The hydrated flour may reach a temperature range of about 65°C to about 80°C. The heat and moisture treatment 108 may comprise a hydrator, cooker and dryer (e.g. a reactor which has several functions) to partially gelatinize the limited protein pulse flour fraction. The agglomerated dough granules may be heated to a temperature of between about 95°C-150°C causing the granules to be cooked and dried to a moisture content of less than about 10% moisture.

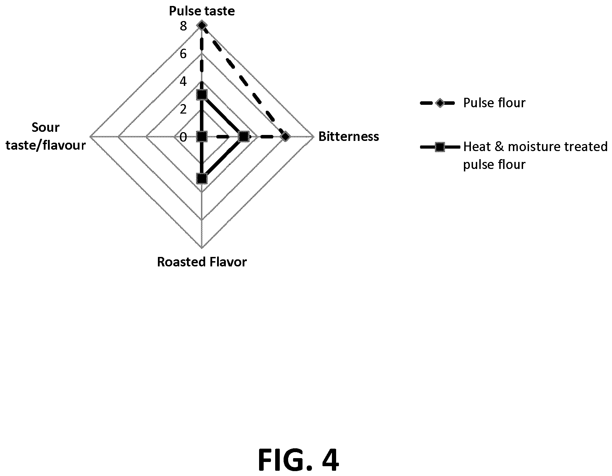

The hydration, heat, moisture treatment, and drying of the limited protein pulse flour fraction reduces levels of volatiles (e.g. hydrocarbons, alcohols, ketones, and/or aldehydes) as well as inactivates bitterness compounds (e.g. saponins, lectins and phenolics) improving the taste, flavour, and/or aroma. In particular, a sensory evaluation comparison presented in FIG. 4 demonstrates the altered taste, flavor, and/or aroma characteristics between the pulse flour and the heat and moisture treated pulse flour. In particular, a pulse taste has been reduced from a strong taste (e.g. 8) to a more mild pulse taste (e.g. 3). The bitterness has also been reduced by half (e.g. from 6 to 3). During the heat and moisture treatment, a roasted flavor may be introduced (e.g. from 0 to 3) into the pulse flour, which may be preferable to the pulse taste for a consumer.

The heat and moisture treated limited protein pulse flour may be milled 110 using a generic fine grinding system such as, for example, an ACM mill, pin mill, turbojet mill, roller mill or any fine grinding system, and passed through a standard US 100 mesh having a sieve size of about 0.150 mm or other comparable mesh standard with a similar sieve size.

Once milled, the agglomerated flour may be mixed within a twin screw extruder with or without steam water to produce pulse dough with a rehydrated moisture content from about 25% to about 43% by weight to be used to prepare a gluten free pasta. In some aspects, the rehydrated moisture content may be from about 5% to about 25% addition by weight. In some aspects, the pulse dough may have a moisture content from about 27% to about 35% by weight. The mixing process may be between about 1 to about 5 minutes. In some aspects, no additional ingredients are added (e.g. a single ingredient pasta). In other aspects, an emulsifier (e.g. glycerol monostearate (GMS)) and/or hydrocolloids (e.g. gums) may be added at about 0.2% to about 1%.

The hydrated pulse dough may then enter an extrusion process 112 in which the wet dough may be formed and cut through a multi-zone temperature-controlled extruder/former and cooker. Forming of the pasta may take place in a single screw extruder or a twin screw extruder to cut the pasta to length. The extrusion process 112 may take between about 3 minutes to about 4 minutes. The extruder may have different mechanical configurations. The extruder includes a motor, a gear box, an extruder barrel, an extruder die, and a cutter. The extruder barrel may be formed of multiple barrel sections and may include at least one screw or at least two screws. The motor drives the screws which may mix, convey, and/or pressurize the pulse dough towards the die. The extruder die receives the pulse pasta dough and presses it through an aperture forming extruded pasta. The cutter may cut the extruded pasta into discrete pieces of a specific length.

A high temperature high shear cooking process may gelatinize starch granules, denature protein bodies and form a protein and starch network. The high-temperature cooking process may occur in the barrel at temperatures ranging from about 60°C to about 120°C, or more particularly cooking may occur at temperatures ranging from about 50°C to about 95°C. Product temperature inlet may be about 25°C to about 30°C. Ambient room temperature initially. The screw speed for the twin-screw extruder may be between about 25-400 rpm. The percent torque for the twin screw extruder may be between about 20% to about 60% depending on production rate. The temperature of the pulse protein dough in the twin screw extruder may be between about 65-125°C.

In another aspect, the temperature of the agglomerated pulse dough within the barrel of the screw extruder may have a cylinder temperature within a range of about 45°C to about 80°C and a feeder temperature with a range of about 45°C to about 85°C. The cylinder may have a pressure with a range of about 20-bar to about 90-bar.

Drying of cooked pasta 114 may be staged through pre-drying, drying, and stabilization steps. The drying process 114 conditions may be conducted according to the parameters given in Table 2. The drying process 114 may take between about 6 hours to about 7 hours for long goods (e.g. spaghetti, lasagna, fettuccine, etc.) and about 3 hours to about 5 hours for short goods (e.g. macaroni, conchiglie, farfalle, penne, etc.) at temperatures between about 80°C and about 85°C. The cooked pasta moisture may be gradually reduced to less than about 12.5%, such as 10%, to produce a dried, finished pasta. In some aspects, the dried pasta may have a moisture content between about 11.7% to about 12.5%. In other aspects, the dried pasta may have a moisture content between about 5% to about 12.5%.

The dried pasta may have a thickness in the range of about 0.5-mm to about 2.2-mm. The pasta may have a cooked weight in a range of about 80% to about 150% of a dry weight. The cooked weight is the total weight of pasta after cooking/boiling process and provides an indication of a total % water absorption and % weight increase based on cooking time. The pasta may have a cooking loss in a range of 5% to 15%. The cooking loss is a total amount of dry materials lost after boiling pasta at atmospheric conditions.

The length of time for the drying process 114 may be calculated based on mass balance, hydration of the low-protein dough, the final moisture in the fresh dough prior to drying. The finished pasta may have a protein range of about 7-16% and may be a single ingredient pasta. In some aspects, the amount of protein may be about 12% (e.g. 11.8%). In other aspects, the amount of protein may be between about 4% to 16% and may have carbohydrates of about 80% by weight or in the range of about 80% to about 93% by weight. Texture of the finished pasta may be achieved by high and/or ultra-high temperature drying processes 114 in a range of about 60-92°C, or in a range of about 120-180°C. The pasta may have a thickness in the range of about 0.5-mm to about 2.2-mm.

**Table 2**

| **Time** | **Temperature** | **Relative Humidity (%)** |
|---|---|---|
| 5 min, | GSC | 80.0 |
| 65 min. | 83C | 78.0 |
| 170 min. | 80C | 76.0 |

The finished pasta may be prepared with atmospheric cooking conditions in a range of about 7 minutes to about 14 minutes. In other aspects, an atmospheric cooking time may be in the range of about 7 minutes to about 25 minutes. In canning applications, the finished pasta may be prepared with high pressure (e.g. 15-20 PSI) cooking conditions for 15-30 minutes. The finished pasta may have similar nutritional properties to durum wheat pasta in terms of proximate analysis and macronutrient properties. Typically, a product cook yield (%) varies between about 180% to about 250%; a product firmness varies from about 400 g-cm to about 5000 g-cm based on shape and size; and a cook loss (%) varies from about 8% to about 14%. The typical nutritional properties of finished pasta produced from peas is given in Table 3. The pasta produced by the technique described herein may have an average lysine level of 0.86%. In some aspects, the pasta produced by the techniques described herein may have an average potassium of approximately 6560 ppm, an average calcium of approximately 206 ppm, an average zinc of approximately 15.1 ppm, an average phosphorus of approximately 2050 ppm, a magnesium of approximately 523 ppm, and/or any combination thereof.

**Table 3**

| **Analysis** | **Level Found** | **Units** | **Serving Size (100 g)** | **Method** |
|---|---|---|---|---|
| Moisture (Vacuum oven) | 10.0 | % | 10.0 g | AOAC variable |
| Protein | 11.8 | % | 11.8 g | MWL FO14 |
| Fat (Acid Hydrolysis) | 1.2 | % | 1.2 g | AOAC 922.06 (mod) |
| Saturated fatty acids | 17.2 | % of fat | 0.2 g | AOAC 996.06 |
| Mono-unsaturated fatty acids | 26 | % of fat | 0.3 g | AOAC 996.06 |
| Poly-unsaturated fatty acids | 56.7 | % of fat | 0.7 g | AOAC 996.06 |
| Trans fatty acids (total) | 0.1 | % of fat | 0 g | AOAC 996.06 |
| Ash | 2 | % | 2 g | MWL FO 022 |
| Carbohydrates | 80.1 | % | 80.1 g | Calculation |
| Sucrose | 2.3 | % sugar | 2.3 g | AOAC 982.14C (mod) |
| Total Sugars | 2.3 | % sugar | 2.3 g | Calculation |
| Dietary fiber (total) | 4.6 | % | 4.6 g | AOAC 991.43 (mod) |
| Dietary fiber (insoluble) | 4.6 | % | 4.6 g | AOAC 991.43 (mod) |
| Calories | | | 378 | 21 CFR PART 101.9 (CALC) |
| Sodium (total) | 31 | ppm | 3 mg | AOAC 2011.14 (mod) |
| Potassium (total) | 6560 | ppm | 656 mg | AOAC 2011.14 (mod) |
| Calcium (total) | 206 | ppm | 20.6 mg | AOAC 2011.14 (mod) |
| Iron (total) | 41 | ppm | 4.1 mg | AOAC 2011.14 (mod) |
| Aspartic acid | 1.45 | % | 1450 mg | AOAC 994.12 (Alt. III) |
| Threonine | 0.48 | % | 480 mg | AOAC 994.12 (Alt. III) |
| Serine | 0.59 | % | 590 mg | AOAC 994.12 (Alt. III) |
| Glutamic acid | 2.16 | % | 2160 mg | AOAC 994.12 (Alt. III) |
| Proline | 0.52 | % | 520 mg | AOAC 994.12 (Alt. III) |
| Glycine | 0.83 | % | 830 mg | AOAC 994.12 (Alt. III) |
| Alanine | 0.54 | % | 540 mg | AOAC 994.12 (Alt. III) |
| Cystine | 0.23 | % | 230 mg | AOAC 994.12 (Alt. III) |
| Valine | 0.57 | % | 570 mg | AOAC 994.12 (Alt. III) |
| Methionine | 0.11 | % | 110 mg | AOAC 994.12 (Alt. III) |
| Isoleucine | 0.54 | % | 540 mg | AOAC 994.12 (Alt. III) |
| Leucine | 0.86 | % | 860 mg | AOAC 994.12 (Alt. III) |
| Tyrosine | 0.41 | % | 410 mg | AOAC 994.12 (Alt. III) |
| Phenylalanine | 0.59 | % | 590 mg | AOAC 994.12 (Alt. III) |
| Lysine (total) | 0.86 | % | 860 mg | AOAC 994.12 (Alt. III) |
| Histidine | 0.28 | % | 280 mg | AOAC 994.12 (Alt. III) |
| Arginine | 0.92 | % | 920 mg | AOAC 994.12 (Alt. III) |
| Tryptophan | 0.14 | % | 140 mg | AOAC 994.12 (Alt. III) |
| Fiber-Sugar Sum | 6.9 | % | 6.9 g | Calculation |
| Zinc (total) | 15.1 | ppm | 1.5 mg | AOAC 2011.14 (mod) |
| Sulfur (total) | 932 | ppm | 93.2 mg | AOAC 2011.14 (mod) |
| Phosphorus (total) | 2050 | ppm | 205 mg | AOAC 2011.14 (mod) |
| Manganese (total) | 5 | ppm | 0.5 mg | AOAC 2011.14 (mod) |
| Magnesium (total) | 523 | ppm | 52.3 mg | AOAC 2011.14 (mod) |
| Copper (total) | 3.9 | ppm | 0.4 mg | AOAC 2011.14 (mod) |
| Molybdenum (total) | 1.17 | ppm | 0.1 mg | USP <233> |
| Starch (total) | 68.63 | % | 68.6 g | AACC 76-11 (mod) |
| Selenium (total) | 0.26 | ppm | 0 mg | USP <233> |

The temperature ranges described herein may be appropriate for an altitude of 560 m above sea level. One of skill in the art may adjust the temperatures according to the altitude where the processes described herein may be performed.

Although the aspects described herein demonstrate a dehulling 102 step, other aspects may perform fine milling 104 on the hulled pulses (or a portion of the hulled pulses) in order to provide a pasta product with additional fiber.

## Claims

1. A method of manufacturing a pasta from pulses comprises:
hydrating and heating a limited-protein pulse fraction with a protein content of less than 16% dry weight to produce a hydrated pulse fraction with a moisture content in a range of 27% to 40% by weight;
agglomerating the hydrated pulse fraction to produce agglomerated dough granules;
drying the agglomerated dough granules to a moisture content of less than about 10% moisture;
rehydrating the agglomerated dough granules and cooking the agglomerated dough granules to produce a cooked pulse dough;
extruding the cooked pulse dough to produce an extruded pasta; and
drying the extruded pasta to produce a dried pasta with a moisture content between about 5% to 12.5% by weight.

2. The method according to claim 1, wherein the limited protein pulse fraction is obtained from at least one of: beans (Phaseolus vulgaris L.), peas (Pisum sativum L.), chickpeas (Cicer arietinum L.), faba beans (Vicia faba L.), lentils (Lens culinaris L.), and any combination thereof.

3. The method according to any one of the claims 1-3, wherein the extruded pasta has a thickness in a range of 0.5-mm to 2.2-mm.

4. The method according to any one of claims 1-3, wherein the extruded pasta has a cooked weight in a range of 80% to 150% of a dry weight.

5. The method according to any one of claims 1-4, wherein the extruded pasta has a cooking loss in a range of 5% to 15%.

6. The method according to any one of claims 1-5, wherein the agglomerating is performed with a pasta press mixer kneader operating in a range of 25 rpm to 130 rpm.

7. The method according to any one of claims 1-6, wherein the rehydrating comprises a steam addition with a range of 5% to 25% addition by weight.

8. The method according to any one of claims 1-7, wherein the extruding of the cooked pulse dough comprises a pasta extruder barrel with a cylinder temperature within a range of 45°C to 80°C.

9. The method according to any one of claims 1-8, wherein the pasta extruder has a feeder temperature has a range of 45°C to 85°C.

10. The method according to any one of claims 1-9, in which head pressure in pasta processing has a range of 20 bar to 90 bar.

11. The method according to claim 1, wherein the hydrating of the limited-protein pulse fraction is hydrated within a vacuum mixer with water in a temperature of about 25°C to 85°C at atmospheric pressure to produce a hydrated pulse dough with a temperature range of about 65°C to about 85°C;
the drying of the agglomerated dough granules involves heating the agglomerated dough granules at about 95°C to about 150°C to cook and dry the agglomerated dough granules to a moisture content of less than about 10% moisture;
the rehydrating of the agglomerated dough granules to a moisture range from about 25% to about 43% by weight; and
the cooking of the agglomerated dough granules occurs in a barrel of a screw extruder to produce the cooked pulse dough.

12. The method according to claim 11, further comprises separating, using classification, a raw pulse flour into the limited protein pulse fraction and a medium-protein pulse fraction with a protein content between about 20% to about 32% dry weight protein.

13. The method according to claim 11, further comprises blending a medium-protein pulse fraction with between about 20% to about 32% dry weight protein and a starch to produce the limited protein pulse fraction.

14. The method according to claim 11, further comprises milling at least one dehulled pulse to produce a raw pulse flour.

15. The method according to claim 14, further comprises dehulling at least one hulled pulse prior to milling to produce the at least one dehulled pulse and at least one outer hull.

16. The method according to claim 15, further comprises cleaning the at least one hulled pulse.

17. The method according to claim 14., wherein the raw pulse flour comprises particle sizes of below about 80-microns.

18. The method according to claim 11, wherein the protein range of the limited protein pulse fraction is within a range of about 5% to about 16% dry weight.

19. The method according to claim 11, wherein the limited protein pulse fraction is hydrated to between about 25% to 43% by weight.

20. The method according to claim 11, wherein the limited protein pulse fraction is hydrated to between about 27% to about 33% by weight.

21. The method according to claim 11, further comprises milling the heated agglomerated pulse dough through a mesh having a sieve size of about 0.150-mm.

22. The method according to claim 11, wherein a temperature of the agglomerated pulse dough within the barrel of the screw extruder ranges from about 105°C to about 125°C at atmospheric pressure.

23. The method according to claim 11, wherein a cooking temperature within the barrel of the screw extruder ranges from about 45°C to about 80°C at atmospheric pressure.

24. The method according to claim 11, wherein a screw speed of the screw extruder is between about 150 rpm to about 400 rpm.

25. The method according to claim 11, wherein a percent torque of the screw extruder is between about 20% to about 50%.

26. The method according to claim 11, wherein the dried pasta has protein in a range of about 4% to about 16% by weight.

27. The method according to claim 11, wherein the dried pasta has protein of about 12%.

28. The method according to claim 11, wherein the extruded pasta is heated in a range of 45°C to about 85°C at atmospheric pressure.

29. The method according to claim 11, wherein the extruded pasta is heated in a range of about 60°C to about 92°C at atmospheric pressure.

30. The method according to claim 11, wherein screw extruder is a twin screw mixer and extruder.

31. The method according to claim 11, further comprising a head pressure with a range of 20 bar to 90 bar.

## Patentansprüche

1. Verfahren zum Herstellen einer Teigware aus Hülsenfrüchten, aufweisend:
Hydratisieren und Erhitzen eines proteinarmen Hülsenfruchtanteils, mit einem Proteingehalt von weniger als 16% Trockengewicht, um einen hydratisierten Hülsenfruchtanteil mit einem Feuchtigkeitsgehalt im Bereich von 27% bis 40 % Gewichtsanteil herzustellen;
Agglomerieren des hydratisierten Hülsenfruchtanteils, um agglomerierten Teigkörnchen herzustellen;
Trocknen der agglomerierten Teigkörnchen auf einen Feuchtigkeitsgehalt von weniger als etwa 10 % Feuchtigkeit;
Rehydrieren der agglomerierten Teigkörnchen und Kochen der agglomerierten Teigkörnchen, um einen gekochten Hülsenfrüchteteig herzustellen;
Extrudieren des gekochten Hülsenfrüchtenteigs, um eine extrudierte Teigware herzustellen; und
Trocknen der extrudierten Teigware, um eine getrocknete Teigware mit einem Feuchtigkeitsgehalt zwischen etwa 5% und 12,5% Gewichtsanteil zu erzeugen.

2. Verfahren nach Anspruch 1, wobei der proteinarme Hülsenfruchtanteil aus mindestens einer von diesen Hülsenfrüchten gewonnen wird: Bohnen (Phaseolus vulgaris L.), Erbsen (Pisum sativum L.), Kichererbsen (Cicer arietinum L.), Ackerbohnen (Vicia faba L.), Linsen (Lens culinaris L.) und irgendeine Kombination davon.

3. Verfahren nach irgendeinem der Ansprüche 1 bis 3, wobei die extrudierte Teigware eine Dicke im Bereich von 0,5 mm bis 2,2 mm haben.

4. Verfahren nach irgendeinem der Ansprüche 1 bis 3, wobei die extrudierte Teigware ein Kochgewicht im Bereich von 80% bis 150% des Trockengewichts hat.

5. Verfahren nach irgendeinem der Ansprüche 1 bis 4, wobei die extrudierte Teigware einen Kochverlust im Bereich von 5% bis 15% aufweist.

6. Verfahren nach irgendeinem der Ansprüche 1 bis 5, wobei das Agglomerieren mit einem Teigwaren Presse-Mischer-Kneter durchgeführt wird, der in einem Bereich von 25 U/min bis 130 U/min arbeitet.

7. Verfahren nach irgendeinem der Ansprüche 1 bis 6, wobei das Rehydrieren eine Dampfzugabe mit einem Gewichtszusatz im Bereich von 5% bis 25% aufweist.

8. Verfahren nach irgendeinem der Ansprüche 1 bis 7, wobei das Extrudieren des gekochten Hülsenfrüchteteigs eine Teigwaren-Extruderschnecke mit einer Zylindertemperatur im Bereich von 45°C bis 80°C aufweist.

9. Verfahren nach irgendeinem der Ansprüche 1 bis 8, wobei der Teigwaren-Extruder eine Zufuhrtemperatur im Bereich von 45°C bis 85°C aufweist.

10. Verfahren nach irgendeinem der Ansprüche 1 bis 9, bei dem der Kopfdruck bei der Teigwarenverarbeitung im Bereich von 20 bar bis 90 bar liegt.

11. Verfahren nach Anspruch 1, wobei
das Hydratisieren des proteinarmen Hülsenfruchtanteil in einem Vakuummischer mit Wasser in einem Temperaturbereich von etwa 25°C bis 85°C bei atmosphärischem Druck hydratisiert wird, um einen hydratisierten Hülsenfruchtteig herzustellen mit einem Temperaturbereich von etwa 65°C bis etwa 85°C;
das Trocknen der agglomerierten Teigkörnchen das Erhitzen der agglomerierten Teigkörnchen auf etwa 95°C bis etwa 150°C mit einbezieht, um die agglomerierten Teigkörnchen zu kochen und die agglomerierten Teigkörnchen auf einen Feuchtigkeitsgehalt von weniger als etwa 10% Feuchtigkeit zu trocknen;
das Rehydrieren der agglomerierten Teigkörnchen zu einem Feuchtigkeitsbereich von etwa 25% bis etwa 43% des Gewichts; und
das Kochen der agglomerierten Teigkörnchen in einer Schnecke eines Schneckenextruders erfolgt, um den gekochten Hülsenfrüchteteig herzustellen.

12. Verfahren nach Anspruch 11, das ferner das Trennen eines rohen Hülsenfrüchtemehls mittels Klassifizierung in den proteinarmen Hülsenfruchtanteil und einen mittleren Proteinanteil der Hülsenfrüchte mit einem Proteingehalt zwischen etwa 20% bis etwa 32% Trockengewicht aufweist.

13. Verfahren nach Anspruch 11, das weiterhin das Vermengen eines mittlerem Protein-Hülsenfruchtanteils mit etwa 20% bis etwa 32% Trockengewicht von Protein und einer Stärke aufweist, um den proteinarmen Hülsenfruchtanteil zu erzeugen.

14. Verfahren nach Anspruch 11, das weiterhin das Mahlen mindestens einer geschälten Hülsenfrucht aufweist, um das rohe Hülsenfruchtmehl herzustellen.

15. Verfahren nach Anspruch 14, das weiterhin das Schälen mindestens einer geschalten Hülsenfrucht vor dem Mahlen aufweist, um die mindestens eine geschälte Hülsenfrucht und mindestens eine äußere Schale zu erzeugen.

16. Verfahren nach Anspruch 15, das weiterhin das Reinigen der mindestens einen, geschalten Hülsenfrucht aufweist.

17. Verfahren nach Anspruch 14, wobei das rohe Hülsenfruchtmehl Partikelgrößen von unter etwa 80 Mikrometern aufweist.

18. Verfahren nach Anspruch 11, wobei der Proteinbereich des proteinarmen Hülsenfruchtanteils in einem Bereich von etwa 5% bis etwa 16% des Trockengewicht liegt.

19. Verfahren nach Anspruch 11, wobei der proteinarmen Hülsenfruchtanteils auf zwischen etwa 25% bis 43% des Gewichts hydratisiert wird.

20. Verfahren nach Anspruch 11, wobei der proteinarmen Hülsenfruchtanteils auf zwischen etwa 27% bis etwa 33% des Gewichtes hydratisiert wird.

21. Verfahren nach Anspruch 11, das weiterhin das Mahlen des erhitzten, agglomerierten Hülsenfruchtteigs durch ein Sieb mit einer Siebgröße von etwa 0,150 mm aufweist.

22. Verfahren nach Anspruch 11, wobei die Temperatur des agglomerierten Hülsenfruchtteigs in der Schnecke des Schneckenextruders bei Atmosphärendruck im Bereich von etwa 105°C bis etwa 125°C liegt.

23. Verfahren nach Anspruch 11, wobei eine Kochtemperatur in der Schnecke des Schneckenextruders bei Atmosphärendruck im Bereich von etwa 45°C bis etwa 80°C liegt.

24. Verfahren nach Anspruch 11, wobei eine Schneckengeschwindigkeit des Schneckenextruders zwischen etwa 150 U/min und etwa 400 U/min liegt.

25. Verfahren nach Anspruch 11, wobei ein prozentuales Drehmoment des Schneckenextruders zwischen etwa 20% bis etwa 50% liegt.

26. Verfahren nach Anspruch 11, wobei die getrocknete Teigware Proteine in einem Bereich von etwa 4% bis etwa 16% des Gewichts aufweisen.

27. Verfahren nach Anspruch 11, wobei die getrocknete Teigware Protein von etwa 12% aufweist.

28. Verfahren nach Anspruch 11, wobei die extrudierte Teigware in einem Bereich von 45°C bis etwa 85°C bei Atmosphärendruck erhitzt wird.

29. Verfahren nach Anspruch 11, wobei die extrudierte Teigware in einem Bereich von etwa 60°C bis etwa 92°C bei Atmosphärendruck erhitzt wird.

30. Verfahren nach Anspruch 11, wobei der Schneckenextruder ein Doppelschneckenmischer und -extruder ist.

31. Verfahren nach Anspruch 11, das weiterhin einen Kopfdruck im Bereich von 20 bar bis 90 bar aufweist.

## Revendications

1. Procédé de fabrication de pâtes à partir de légumes secs comprenant :
l'hydratation et le chauffage d'une fraction de légumes secs à protéines limitées ayant une teneur en protéines inférieure à 16 % en poids sec pour produire une fraction de légumes secs hydratée ayant une teneur en humidité comprise dans une plage de 27 % à 40 % en poids ;
l'agglomération de la fraction de légumes secs hydratée pour produire des granulés de pâte agglomérés ;
le séchage des granulés de pâte agglomérés à une teneur en humidité inférieure à environ 10 % d'humidité ;
la réhydratation des granulés de pâte agglomérés et la cuisson des granulés de pâte agglomérés pour produire une pâte de légumes secs cuite ;
l'extrusion de la pâte de légumes secs cuite pour produire des pâtes extrudées ; et
le séchage des pâtes extrudées pour produire des pâtes séchées ayant une teneur en humidité comprise entre environ 5 % et 12,5 % en poids.

2. Procédé selon la revendication 1, dans lequel la fraction de légumes secs à protéines limitées est obtenue à partir d'au moins l'un parmi : les haricots (Phaseolus vulgaris L.), les pois (Pisum sativum L.), les pois chiches (Cicer arietinum L.), les féveroles (Vicia faba L.), les lentilles (Lens culinaris L.), et une quelconque combinaison de ceux-ci.

3. Procédé selon l'une quelconque des revendications 1 à 3, dans lequel les pâtes extrudées ont une épaisseur comprise dans une plage de 0,5 mm à 2,2 mm.

4. Procédé selon l'une quelconque des revendications 1 à 3, dans lequel les pâtes extrudées ont un poids cuit compris dans une plage de 80 % à 150 % d'un poids sec.

5. Procédé selon l'une quelconque des revendications 1 à 4, dans lequel les pâtes extrudées ont une perte à la cuisson comprise dans une plage de 5 % à 15 %.

6. Procédé selon l'une quelconque des revendications 1 à 5, dans lequel l'agglomération est effectuée avec un malaxeur mélangeur à presse pour pâtes fonctionnant dans une plage de 25 tr/min à 130 tr/min.

7. Procédé selon l'une quelconque des revendications 1 à 6, dans lequel la réhydratation comprend une addition de vapeur avec une plage de 5 % à 25 % d'addition en poids.

8. Procédé selon l'une quelconque des revendications 1 à 7, dans lequel l'extrusion de la pâte de légumes secs cuite comprend un cylindre d'extrudeuse de pâtes ayant une température de cylindre comprise dans une plage de 45 °C à 80 °C.

9. Procédé selon l'une quelconque des revendications 1 à 8, dans lequel l'extrudeuse de pâtes a la température de l'alimentation comprise dans une plage de 45 °C à 85 °C.

10. Procédé selon l'une quelconque des revendications 1 à 9, dans lequel la pression de tête dans le traitement des pâtes a une plage de 20 bars à 90 bars.

11. Procédé selon la revendication 1, dans lequel l'hydratation de la fraction de légumes secs à protéines limitées est hydratée au sein d'un mixeur sous vide avec de l'eau à une température d'environ 25 °C à 85 °C à la pression atmosphérique pour produire une pâte de légumes secs hydratée ayant une plage de température d'environ 65 °C à environ 85 °C ;
le séchage des granulés de pâte agglomérés implique le chauffage des granulés de pâte agglomérés à environ 95 °C à environ 150 °C pour cuire et sécher les granulés de pâte agglomérés jusqu'à une teneur en humidité inférieure à environ 10 % d'humidité ;
la réhydratation des granulés de pâte agglomérés jusqu'à une plage d'humidité d'environ 25 % à environ 43 % en poids ; et
la cuisson des granulés de pâte agglomérés se produit dans un cylindre d'une extrudeuse à vis pour produire la pâte de légumes secs cuite.

12. Procédé selon la revendication 11, comprenant en outre la séparation, à l'aide d'une classification, d'une farine de légumes secs brute en la fraction de légumes secs à protéines limitées et une fraction de légumes secs à teneur en protéines moyenne ayant une teneur en protéines entre environ 20 % et environ 32 % de protéines en poids sec.

13. Procédé selon la revendication 11, comprenant en outre le mélange d'une fraction de légumes secs à teneur en protéines moyenne ayant une teneur en protéines entre environ 20 % et environ 32 % de protéines en poids sec et d'un amidon pour produire la fraction de légumes secs à protéines limitées.

14. Procédé selon la revendication 11, comprenant en outre le broyage d'au moins un légume sec à coque pour produire une farine de légume sec brute.

15. Procédé selon la revendication 14, comprenant en outre le décorticage d'au moins un légume sec à coque avant le broyage pour produire l'au moins un légume sec décortiqué et au moins une coque extérieure.

16. Procédé selon la revendication 15, comprenant en outre le nettoyage de l'au moins un légume sec décortiqué.

17. Procédé selon la revendication 14, dans lequel la farine de légume sec brute comprend des tailles de particules inférieures à environ 80 microns.

18. Procédé selon la revendication 11, dans lequel la plage de protéines de la fraction de légumes secs à protéines limitée est comprise dans la plage d'environ 5 % à environ 16 % en poids sec.

19. Procédé selon la revendication 11, dans lequel la fraction de légumes secs à protéines limitée est hydratée entre environ 25 % et 43 % en poids.

20. Procédé selon la revendication 11, dans lequel la fraction de légumes secs à protéines limitée est hydratée entre environ 27 % et environ 33 % en poids.

21. Procédé selon la revendication 11, comprenant en outre le broyage de la pâte de légumes secs agglomérée chauffée à travers une maille ayant une taille de tamis d'environ 0,150 mm.

22. Procédé selon la revendication 11, dans lequel une température de la pâte de légumes secs agglomérée au sein du cylindre de l'extrudeuse à vis est comprise dans la plage d'environ 105 °C à environ 125 °C à la pression atmosphérique.

23. Procédé selon la revendication 11, dans lequel une température de cuisson au sein du cylindre de l'extrudeuse à vis est comprise dans la plage d'environ 45 °C à environ 80 °C à la pression atmosphérique.

24. Procédé selon la revendication 11, dans lequel une vitesse de vis de l'extrudeuse à vis est comprise entre environ 150 tr/min et environ 400 tr/min.

25. Procédé selon la revendication 11, dans lequel un pourcentage de couple de l'extrudeuse à vis est compris entre environ 20 % et environ 50 %.

26. Procédé selon la revendication 11, dans lequel les pâtes séchées ont une protéine comprise dans une plage d'environ 4 % à environ 16 % en poids.

27. Procédé selon la revendication 11, dans lequel les pâtes séchées ont une protéine d'environ 12 % de protéines.

28. Procédé selon la revendication 11, dans lequel les pâtes extrudées sont chauffées dans une plage de 45 °C à environ 85 °C à la pression atmosphérique.

29. Procédé selon la revendication 11, dans lequel les pâtes extrudées sont chauffées dans une plage d'environ 60 °C à environ 92 °C à la pression atmosphérique.

30. Procédé selon la revendication 11, dans lequel l'extrudeuse à vis est un mélangeur et une extrudeuse à double vis.

31. Procédé selon la revendication 11, comprenant en outre une pression de tête comprise dans une plage de 20 bars à 90 bars.
